(19) Europäisches Patentamt European Patent Office Office européen des brevets

(11) **EP 3 367 121 B1**

(12) **EUROPEAN PATENT SPECIFICATION**

(45) Date of publication and mention
of the grant of the patent:
**08.04.2020  Bulletin 2020/15**

(51) Int Cl.:
*G01S 13/42* *(2006.01)*        *G01S 13/72* *(2006.01)*
*G01S 13/93* *(2020.01)*        *G01S 13/90* *(2006.01)*
*G01S 13/58* *(2006.01)*        *G01S 13/86* *(2006.01)*

(21) Application number: **17157547.5**

(22) Date of filing: **23.02.2017**

(54) **INVERTED SYNTHETIC APERTURE RADAR FOR A VEHICLE RADAR SYSTEM**

RADAR MIT INVERSER SYNTHETISCHER APERTUR FÜR EIN RADARSYSTEM EINES KRAFTFAHRZEUGS

RADAR À OUVERTURE SYNTHÉTIQUE INVERSÉE POUR UN SYSTÈME DE RADAR DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.08.2018  Bulletin 2018/35**

(73) Proprietor: **Veoneer Sweden AB**
**447 83 Vårgårda (SE)**

(72) Inventor: **Jenkins, Alan**
**85391 Allershausen (DE)**

(74) Representative: **Sandstedt, Jonas Sven James et al**
**WESTPATENT AB**
**Almekärrsvägen 11**
**443 39 Lerum (SE)**

(56) References cited:
EP-A2- 0 393 698        DE-A1-102010 015 723
US-B2- 9 182 476

- **ZHAODA ZHU ET AL: "One-dimensional ISAR imaging of multiple moving targets", AEROSPACE AND ELECTRONICS CONFERENCE, 1994. NAECON 1994., PROCEEDINGS OF THE IEEE 1994 NATIONAL DAYTON, OH, USA 23-27 MAY 1, NEW YORK, NY, USA,IEEE, 23 May 1994 (1994-05-23), pages 171-174, XP010122286, DOI: 10.1109/NAECON.1994.332882 ISBN: 978-0-7803-1893-9**
- **XIAO DONG ET AL: "ISAR imaging of multiple targets based on sparse representations", 2015 IEEE INTERNATIONAL CONFERENCE ON MICROWAVES, COMMUNICATIONS, ANTENNAS AND ELECTRONIC SYSTEMS (COMCAS), IEEE, 2 November 2015 (2015-11-02), pages 1-4, XP032834883, DOI: 10.1109/COMCAS.2015.7360459 [retrieved on 2015-12-17]**
- **LIU LEI ET AL: "A Novel Method for Multi-Targets ISAR Imaging Based on Particle Swarm Optimization and Modified CLEAN Technique", IEEE SENSORS JOURNAL, IEEE SERVICE CENTER, NEW YORK, NY, US, vol. 16, no. 1, 1 January 2016 (2016-01-01), pages 97-108, XP011594548, ISSN: 1530-437X, DOI: 10.1109/JSEN.2015.2478808 [retrieved on 2015-12-11]**

EP 3 367 121 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **YAMAMOTO K ET AL: "AN ISAR IMAGING ALGORITHM FOR MULTIPLE TARGETS OF DIFFERENT RADIAL VELOCITY", ELECTRONICS & COMMUNICATIONS IN JAPAN, PART I - COMMUNICATIONS, WILEY, HOBOKEN, NJ, US, vol. 86, no. 7, PART 01, 1 January 2003 (2003-01-01), pages 1-10, XP001144087, ISSN: 8756-6621**

**Description**

DESCRIPTION OF THE DISCLOSURE

The present disclosure relates to a vehicle environment detection system that comprises at least one radar sensor arrangement and at least one processing unit. The radar sensor arrangement comprises an antenna device that has a physical antenna aperture with a certain field of view, and is arranged to detect at least two radar detections in a coordinate system during at least two radar cycles.

Today, vehicle environment detection systems, such as for example camera systems, Doppler radar systems and LIDAR systems, can be mounted on a vehicle in order to detect objects in order to implement functions such as speed control and collision prevention, as well as other such as auto alignment, online bumper fascia calibration, ego motion estimation and scene understanding.

Radar systems are arranged to produce output comprising a series of reflection points as measured by radar sensors. These reflection points can be treated as separate detections or grouped as tracked objects, providing a common motion state for an extended object.

The document DE 102008025773 relates to estimating a location and movement state of an observed object using stereo image processing. 3D points are tracked using a Kalman filter for the image sequences. Keeping track of 3D points leads to so-called 6D vectors in which a 3D position is combined with a 3D velocity vector.

US 9182476 B2 relates to a radar system for driver assistance systems in a motor vehicle.

Synthetic aperture radar (SAR) techniques have enabled automotive radar systems to produce more detailed output. For SAR, a radar sensor antenna aperture is synthesized by taking measurements at known intervals in time and using the motion of the radar sensor to effectively move the physical antenna aperture sampling point over time, at the rate of the motion of the radar. Thus a number Mn of measurement samples is obtained, which measurement samples then are recombined to form a larger effective antenna aperture. The size of this so-called synthetic antenna aperture is determined by the velocity of the radar sensor, the number Mn of measurement samples, and the time between these measurement samples, and can be significantly larger than the aperture of the physical radar antennas. However, SAR is limited to stationary objects only in order to enable a useful recombination of all measurements samples.

It is well known in the art that a technique based on SAR, known as inverse SAR, or iSAR, can be applied to moving objects if the sensing radar is static and the motion moving objects is known. Considering that this motion is relative between a radar sensor antenna aperture and a target, generalized equations with respect to this relative motion between the target and the antenna aperture allow the coordinate system to be mapped such that the target is once again stationary and the antenna aperture moves. The times and relative distances between the observation points of the target needs to be known to phase rotate the measurement vectors. The original SAR processing can then be used.

However, for iSAR, the motion of the target must be known a priori. This can for example be achieved by either knowing the motion model in advance, such as for example a propeller turbine blade motion which can be known before hand, or by iteratively fitting a motion model to the measurement data in a suitable way, which is very computationally expensive.

It is therefore desired to provide a vehicle radar system that is arranged for iSAR measurements.

This is achieved by means of a vehicle environment detection system that comprises at least one radar sensor arrangement and at least one processing unit. The radar sensor arrangement comprises an antenna device that has a physical antenna aperture with a certain field of view, and is arranged to detect at least two radar detections in a coordinate system during at least two radar cycles. For each radar cycle, said processing unit is arranged to generate a detection list comprising range, azimuth angle and Doppler velocity for each one of said radar detections. The processing unit is further arranged to aggregate and store detection lists from said radar cycles in a detection memory, and then to group the radar detections in the detection lists into consistently moving motion subsets in a segmentation procedure. Each motion subset corresponds to a certain target object and has a corresponding group motion vector that is determined by the processing unit. The processing unit is further arranged to:

- Determine a relative motion between at least one target object and the antenna device by means of said group motion vector.

- Map the coordinate system such that said target object is stationary and such that the antenna device has a determined motion.

- Generate a synthetic antenna aperture by means of acquired radar signals at known intervals in time, and by means of the determined motion of the antenna device, such that the physical antenna aperture is conferred a determined movement over time.

This is also achieved by means of a method for obtaining a synthetic antenna aperture using a radar sensor arrangement that uses an antenna device with a physical antenna aperture, where the radar sensor arrangement is used in a coordinate system for receiving radar signals outside a vehicle. The method comprises:

- Detecting at least two radar detections in the coordinate system during at least two radar cycles.

- For each radar cycle, generating a detection list comprising range, azimuth angle and Doppler velocity for each one of said radar detections.
- Aggregating and storing detection lists from said radar cycles in a detection memory.
- Grouping the radar detections in the detection lists into consistently moving motion subsets in a segmentation procedure, where each motion subset corresponds to a certain target object.
- Determining a corresponding group motion vector.
- Determining a relative motion between at least one target object and the antenna device by means of said group motion vector.
- Mapping the coordinate system such that said target object is stationary and such that the antenna device has a determined motion.
- Generating a synthetic antenna aperture using acquired radar signals at known intervals in time, and by using the determined motion of the antenna device, such that the physical antenna aperture is conferred a determined movement over time.

According to some aspects, for each radar cycle, said processing unit is arranged to:

- Generate an output list of motion subsets, where the output list comprises a group motion vector for each motion subset, and where each group motion vector represents a group motion of a respective motion subset.

- Generate a labelling of each input detection, where, for each radar detection, the labelling comprises an object identifier which describes to which motion subset a given radar detection belongs, and additional flags for each radar detection.

According to some aspects, in order to perform the segmentation procedure, for each one of all available motion subsets said processing unit is arranged to:

- Predict a present motion subset for the next radar cycle, independently of other motion subsets.

- Associate new radar detections with the present motion subset.

- Generate an updated group motion vector.

Said processing unit is further arranged to generate an updated list of motion subsets.
Other examples are disclosed in the dependent claims.
A number of advantages are obtained by means of the present disclosure. Mainly, it enables a motion model of each target object relative to the radar sensor arrangement to be determined. The motion model in turn enables an inverse SAR technique to be applied to the already received and stored radar signals such that a synthetic aperture view is obtained.

BRIEF DESCRIPTION OF THE DRAWINGS

The present disclosure will now be described more in detail with reference to the appended drawings, where:

Figure 1      shows a schematic top view of a vehicle with a vehicle environment detection system;

Figure 2      shows an overview flowchart for the present disclosure;

Figure 3      shows a graphic representation of radar detections in an azimuth angle vs. Doppler velocity domain;

Figure 4      shows a flowchart for a segmentation process;

Figure 5A     shows a schematic top view of radar detections in motion subsets before merging;

Figure 5B     shows a schematic top view of radar detections in motion subsets after merging; and

Figure 6      shows a flowchart for a method according to the present disclosure.

DETAILED DESCRIPTION

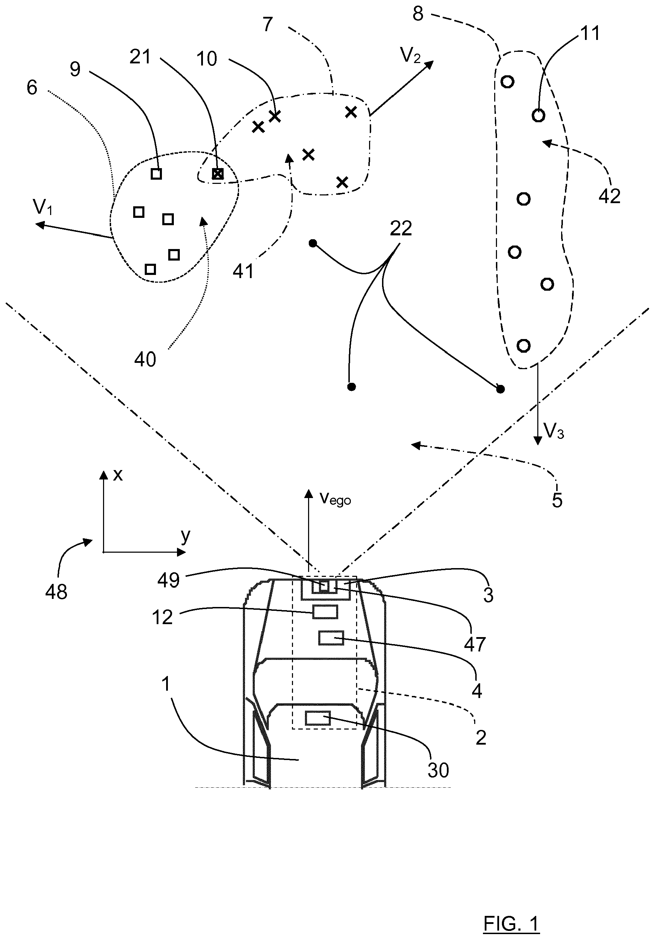

With reference to Figure 1, showing a first example, an ego vehicle 1 comprises a vehicle environment detection system 2 that in turn comprises a radar sensor arrangement 3 and a processing unit 4, where the radar sensor arrangement 3 comprises an antenna device 47 that has a physical antenna aperture 49 with a certain field of view 5 that is directed in front of the vehicle 1. There are three target objects 6, 7, 8 present in the field of view 5, where these targets objects 6, 7, 8 are detected by means of a plurality of radar detections 9, 10, 11 for each target object in a coordinate system 48.
For a first target object 6, there is a first plurality of radar detections 9 that are shown as squares; for a second target object 7, there is a second plurality of radar detections 10 that are shown as crosses, and for a third target object 8, there is a third plurality of radar detections 11 that are shown as circles. For reasons of clarity, only one radar detection is denoted with a reference number in the relevant drawings for each plurality of radar detections.
The first target object 6 is moving with a first velocity in a first direction according to a first group motion vector $V_1$, the second target object 7 is moving with a second velocity in a second direction according to a sec-

ond group motion vector $V_2$, and the third target object 8 is moving with a third velocity in a third direction according to a third group motion vector $V_3$.

All the radar detections 9, 10, 11 are divided and grouped into distinct and consistently moving motion subsets 40, 41, 42 such that the processing unit 4 is enabled to identify different target objects 6, 7, 8 and to separate these from each other.

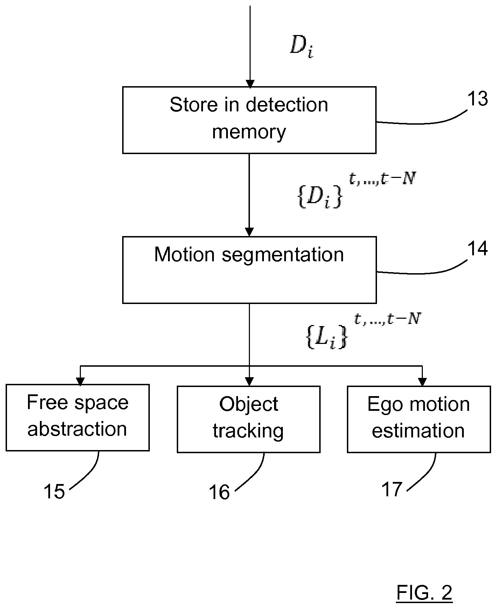

More in detail, with reference also to Figure 2, at each radar cycle a detection list comprising radar detections is generated by means of radar signal processing at the processing unit 4. Each radar detection in the list is at least defined by range $r_i$, azimuth angle $\varphi_i$ and Doppler velocity $v_i$, which means that a general radar detection $D_i = (r_i, \varphi_i, v_i)$.

In this context, a radar cycle is one observation phase during which the vehicle environment detection system 2 is arranged to acquire data, process said data on several signal processing levels and to send out available results. This can be a fixed time interval (e.g. 40 to 60 milliseconds), or it can be a dynamic time interval depending on environment conditions and processing load.

At a first processing step 13, the processing unit 4 is arranged to aggregate and store a detection list

$$\left\{ D_i^t \right\}^{t=t_0,...,t_0-N}.$$ N is the number of radar cycles,

$t_0$ is the current cycle, $t_0$-1 is the previous cycle, $t_0$-2 is two cycles in the past, and $t_0$-N is N cycles in the past.

This detection list $\left\{ D_i^t \right\}^{t=t_0,...,t_0-N}$ is aggregated and stored from each radar cycle in a detection memory 12 connected to the processing unit 4. In this way, not only detections from a current radar cycle are considered, but also detections observed in previous radar cycles. To this end, the detection lists obtained in each radar cycle are stored in the detection memory 12 for up to N radar cycles.

At a second processing step 14, the processing unit 4 is arranged to perform motion segmentation where motion segmentation is performed for all incoming radar detections from all available stored cycles. Motion segmentation is achieved by grouping the stored radar detections 9, 10, 11 in the detection lists

$$\left\{ D_i^t \right\}^{t=t_0,...,t_0-N}$$ into consistently moving motion subsets 40, 41, 42 corresponding to said target objects 6, 7, 8.

This output is represented by:

1) a list M of motion subsets, and
2) a labelling $L_i$ of each input detection.

Generally, the list M of motion subsets is here written as M = {$V_1$, $V_2$, ..., $V_k$, ..., $V_n$} and contains for each motion subset a group motion vector $V_k$ which rep-

resents the group motion of a respective motion subset.

The labelling $L_i = (I_i, f_i)$ for each radar detection comprises

a) an object identifier $I_i$ which describes to which motion subset a given radar detection belongs, as well as

b) additional flags $f_i$ for each radar detection.

According to the present disclosure, the processing unit 4 is arranged to generate a synthetic aperture view of the target objects 6, 7, 8 that exceeds the field of view 5 of the antenna device 47 by applying iSAR (inverted Synthetic Aperture Radar) technology.

In general, for moving target objects, both the antenna device 47 and the target object 6, 7, 8 are moving. However, for generating a synthetic aperture view of a target object, only the relative motion between the antenna device 47 and the target object 6, 7, 8 is required. This is possible since the known motion of a target objet can be used to map the radar detections in the coordinate system 48 onto an observation plane that mimics an extended baseline such that said target object 6, 7, 8 is stationary and such that the antenna device 47 has a determined motion. By means of the present disclosure, it is possible to directly apply an iSAR technique to a moving target object while the vehicle is moving.

In order to obtain a synthetic antenna aperture, the processing unit 4 is arranged to:

- Determine a relative motion between at least one target object 6, 7, 8 and the antenna device 47 by means of said group motion vector $V_1$, $V_2$, $V_3$.

- Map the coordinate system 48 such that said target object 6, 7, 8 is stationary and such that the antenna device 47 has a determined motion.

- Generate a synthetic antenna aperture by means of acquired radar signals at known intervals in time, and by means of the determined motion of the antenna device 47, such that the physical antenna aperture 49 is conferred a determined movement over time.

By acquiring a certain motion subset 40, 41, 42 corresponding to a certain target object 6, 7, 8 having a certain group motion vector $V_1$, $V_2$, $V_3$, the motion profile of that target object 6, 7, 8 is known. Detection lists from previous radar cycles plus new detection lists from the current radar cycle are used to generate new track parameters for that target object 6, 7, 8. By means of the group motion vector $v_1$, $v_2$, $v_3$, a motion profile of the target object 6, 7, 8 is obtained.

Additionally, the Range-Doppler information per radar cycle comprises a data set that is used to generate the group motion vector, and thus the target object's motion profile. This data set is the same data set that is used to generate the synthetic aperture image. Thus, by combining the object motion profile with iSAR processing, a synthetic aperture image of a moving object is generated by means of the generated synthetic antenna aperture.

The motion segmentation constitutes a rich representation of the incoming data, and is achieved by both spatial proximity features as well as motion similarity. In this example, as shown in Figure 1, the ego vehicle 1 is moving straight forward in an x-direction with an ego velocity $v_{ego}$. Stationary objects will induce exactly this group velocity in relative coordinates, having a third motion vector $v_3$ that equals the ego velocity $v_{ego}$. In this example, this is shown for the third target object 8, which is the group of ground stationary objects, for example a guard rail. The other two target objects 6, 7 represent two other distinct objects which are spatially close to each other, but have a different respective first motion vector $V_1$ and second motion vector $V_2$.

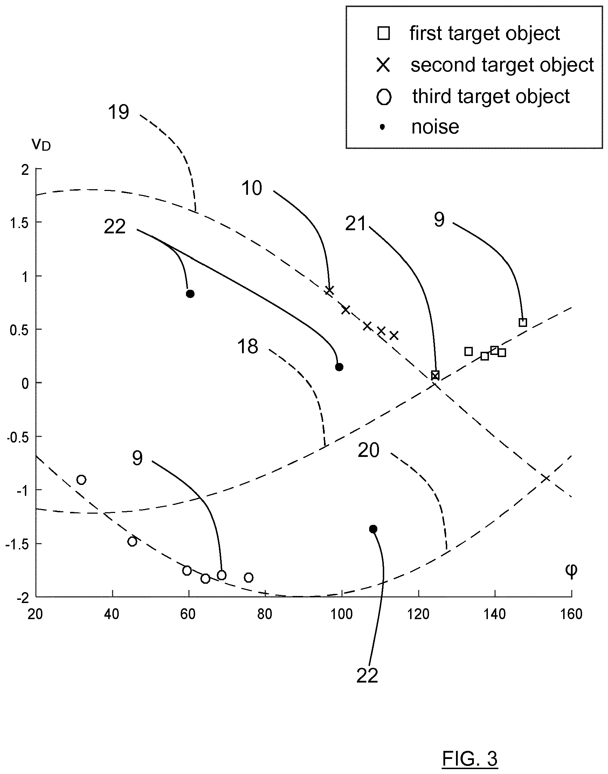

When performing motion segmentation, the motion vectors $V_1$, $V_2$, $V_3$ are not directly observable since a Doppler radar can measure range, azimuth angle and radial Doppler velocity, but not the tangential velocity component. Therefore, with reference also to Figure 3, the motion segmentation leverages the fact that multiple reflections from a single rigidly moving object lie on a cosine function in an azimuth angle φ vs. Doppler velocity $v_D$ domain. Here, the same radar detections 9, 10, 11 as shown in Figure 2 are present, represented in the azimuth angle φ vs. Doppler velocity $v_D$ domain. It is here shown that the first plurality of radar detections 9 follow a first cosine curve 18, the second plurality of radar detections 10 follow a second cosine curve 19 and the third plurality of radar detections 11 follow a third cosine curve 20. One ambiguous radar detection 21 is present in an intersection between the first cosine curve and the second cosine curve; this ambiguous radar detection 21 is also shown in Figure 1.

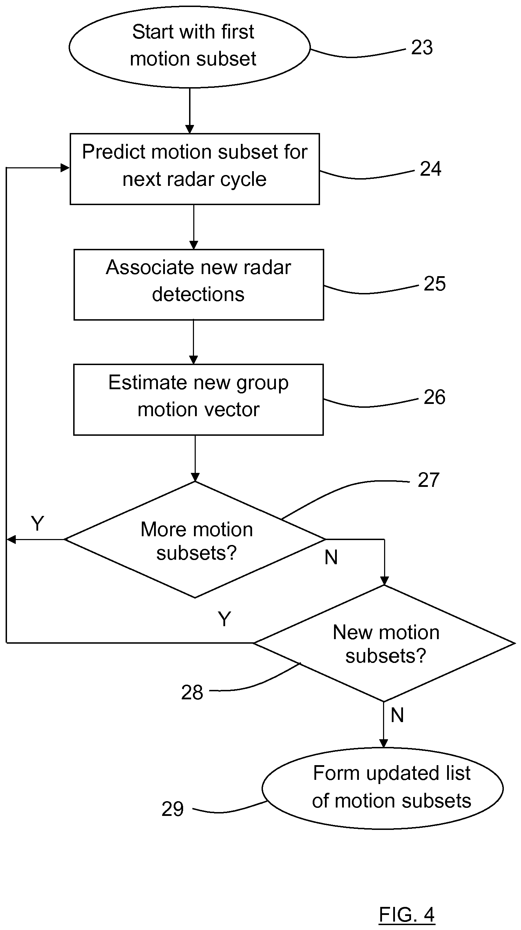

The motion segmentation process according to the second processing step 14 above runs in the following segmentation steps as depicted in Figure 4. Starting from a first motion subset 40 in a first segmentation step 23, for example corresponding to the first target object 6, the first motion subset 40 is in a second segmentation step 24 predicted for the next radar cycle, independently of other motion subsets 41, 42.

In a third segmentation step 25, new incoming radar detections in a next radar cycle are associated with the present motion subset. In a fourth segmentation step 26, an updated group motion vector is estimated. In a fifth segmentation step 27 it is checked if there are more motion subsets, and the second to fourth segmentation steps 24, 25, 26 are repeated for all available motion subsets. In order to propagate the present motion subset 40 to a next radar cycle, this motion subset 40 is first predicted, new radar detections are associated, and finally the group motion vector is updated.

When all available motion subsets 40, 41, 42 have been processed, new motion subsets are searched for by means of unassociated detections in a sixth segmentation step 28. Possible new motion subsets are processed according to the second to fourth segmentation steps. When there are no new motion subsets, an updated list $M_u$ of motion subsets is created in a seventh segmentation step 29.

As mentioned above, each target object 6, 7, 8 corresponds to a motion subset 40, 41, 42 that is represented by a corresponding group motion vector $V_1$, $V_2$, $V_3$ and a labelling of the associated detections. No further abstractions such as position, box model, etc. are needed to describe the state of a motion subset. This is advantageous since no model fitting is needed; instead each motion subset 40, 41, 42 is described directly from the input data. This provides robustness against noise and erroneous prone fitting algorithms.

The above segmentation steps will now be described more in detail. Regarding the second segmentation step 24, prediction is performed based on the radar detections 9, 10, 11 which belong to a given motion subset 40, 41, 42. For each motion subset 40, 41, 42, each one of the corresponding detections 9, 10, 11 is moved in the x- and y-direction according to the present group motion vector. According to some aspects, data from multiple previous cycles, which are stored in the detection memory 12, are used. This means that radar detections 9, 10, 11 which are associated with a certain motion subset 40, 41, 42 are predicted from several previous radar cycles.

Regarding the third segmentation step, association is performed by spatial considerations where new radar detections from the next cycle are associated, i.e. considered for an update, if they are close enough to any of the corresponding radar detections belonging to a certain motion subset. This does not rely on model information and depends only on the position of the predicted detections of said motion subset. In this way, a non-parametric extended shape model is realized. Furthermore, additional robustness of this non-parametric model is achieved by including detections from several previous radar cycles, stored in the detection memory, in the association process. The shape of a tracked object is then defined by associated detections from several previous radar cycles.

Regarding the fourth segmentation step, the radar detections which are spatially close are considered inlier candidates. For these candidates, a full group motion vector is estimated using the angle and Doppler velocity information. It is assumed that detections belonging to the same object have a shared group motion vector. The projection of this group motion vector onto the radial direction of each individual detection, determined by the measured angle, corresponds to the measured Doppler velocity. This corresponds to:

$$\begin{bmatrix} v_1 \\ v_2 \\ \vdots \\ v_n \end{bmatrix} = \begin{bmatrix} \cos(\varphi_1) & \sin(\varphi_1) \\ \cos(\varphi_2) & \sin(\varphi_2) \\ \vdots & \vdots \\ \cos(\varphi_n) & \sin(\varphi_n) \end{bmatrix} \cdot \begin{bmatrix} v_x \\ v_y \end{bmatrix}. \qquad (1)$$

Inverting equation (1) results in an estimate of the group motion vector

$$\begin{bmatrix} v_x \\ v_y \end{bmatrix}. \qquad (2)$$

Some measured angles $\varphi_i$ and measured Doppler velocities $v_i$ of the radar detections 9, 10, 11 are noisy and outliers, for example due to rotating wheels, can result in deviation from this ideal equation. Radar detections 22 that are due to noise are shown with dots in Figure 1 and Figure 2. Therefore, in practice and to increase robustness, robust estimators such as RANSAC(Random sample consensus) can be used to reject outliers from this estimation process. Outliers are then removed and inliers remain. Then each detection is labelled with the additional information $f_i$ indicating whether it is an inlier or outlier with respect to the velocity profile. In later processing stages, this can for example be utilized for wheel detection and object classification.

Physical objects are typically seen by the radar sensor arrangement 3 as multiple detections per radar cycle, especially in a near range. In some situations, there can be a smaller number of detections. This is the case for example at a far range, or for small objects such as pedestrians. To increase the number of detections the detection memory (12) is used to also store detections from previous radar cycles. In this way, even with a low number of detections per cycle, a full group velocity estimate according to equation (1) is possible.

In the presented example, the first target object 6 and the second target object 7, as well as their corresponding motion subsets 40, 41, are spatially close to each other. One of the detections, the ambiguous radar detection 21, is associated to both motion subsets 40, 41 because of its spatial proximity. In addition, this ambiguous radar detection 21 also fulfills the velocity profile according to equation (1) and is therefore close to both the first cosine curve and the second cosine curve as discussed previously. This radar detection 21 is indicated as determined to constitute an ambiguous radar detection for two or more motion subsets 40, 41, which is vital information for the processing unit 4 in further processing stages. For example, an extended object tracking algorithm can be adapted to ignore ambiguous detections when shape estimation is performed.

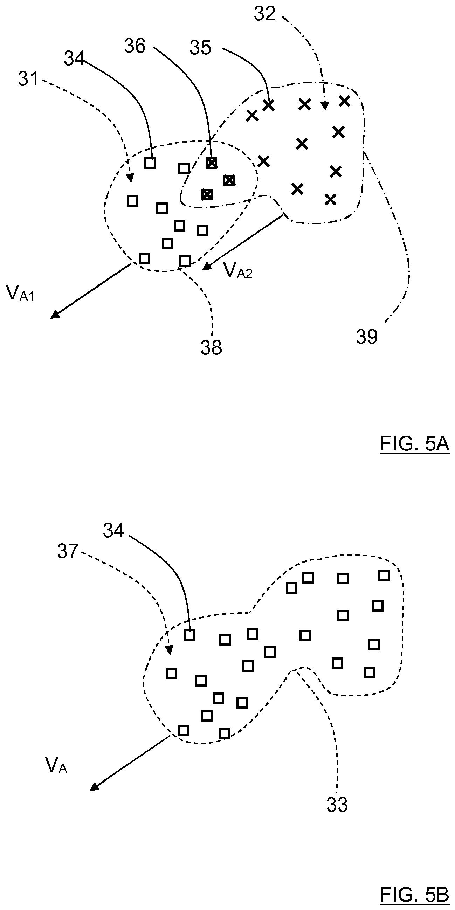

Distinct motion subsets, and then also corresponding target objects 38, 39, can become indistinguishable from each other if the corresponding targets objects get too close to each other and also more or less move in the same direction. For example, as shown in Figure 5A, two distinct motion subsets 31, 32 can result from a single physical target object 33 that can be relatively large. Both these motion subsets 31, 32 have equal group motion vectors $V_{A1}$, $V_{A2}$, and in the azimuth angle vs. Doppler velocity domain, the two corresponding cosine curves overlap. In this case many, or even all, associated radar detections 34, 35, 36 are determined to be ambiguous.

Therefore, according to some aspects and with reference also to Figure 5B, the processing unit 4 is arranged to perform a merge function for merging two motion subsets 31, 32 into one merged subset 37. To this end, the processing unit 4 is arranged to check for detections that have been determined to be ambiguous and to check if the associated motion subsets have equal, or at least very similar, group motion vectors $V_{A1}$, $V_{A2}$. If that is the case, the processing unit 4 is arranged to merge two motion subsets 31, 32 and the corresponding radar detections 34 into a resulting merged motion subset 37, and consequently the corresponding target objects 38, 39 are merged to one and the same corresponding target object 33 having one group motion vectors $V_A$.

Merging itself is straight-forward; since the group velocity vectors $V_{A1}$, $V_{A2}$ are identical, or at least very similar, the processing unit 4 is arranged to perform averaging or a similar approach that provides a merged group velocity vector. The processing unit 4 is arranged to model the spatial extent of the merged motion subset by labelling the associated detections. All the corresponding labelled detections only need to be assigned the identification of the merged motion subset. The non-parametric shape model is thus beneficial for target object merging of this kind.

According to some aspects, regarding the sixth segmentation step, the processing unit 4 is arranged to determine that radar detections which are not associated with any existing motion subset are unassociated. For unassociated radar detections, a seeker algorithm can search for new motion subsets. According to some aspects, classical seeker algorithms which are arranged to search a consistent stream of single detections can be used. However, directly estimating a full group motion vector using detections from a single radar cycle by applying equation (1) is also conceivable. This allows for very fast object initialization, especially in the near range where objects typically reflect from multiple angles and thus result in multiple detections.

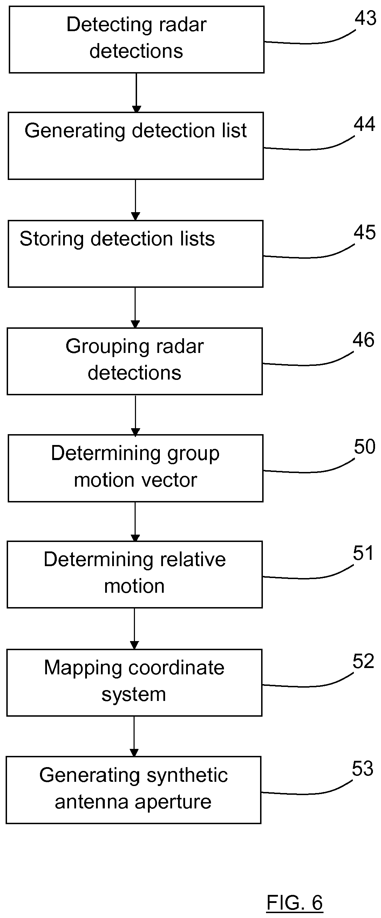

With reference to Figure 6, the present disclosure also relates to a method for obtaining a synthetic antenna aperture using a radar sensor arrangement 3 that uses an antenna device 47 with a physical antenna aperture 49. The radar sensor arrangement 3 is used in a coordinate system 48 for receiving radar signals 9, 10, 11 outside a vehicle. The method comprises:

> 43: Detecting at least two radar detections 9, 10, 11 in the coordinate system 48 during at least two radar cycles.

44: For each radar cycle, generating a detection list $\{D_i^t\}^{t=t_0,...,t_0-N}$ comprising range $r_i$), azimuth angle $\varphi_i$ and Doppler velocity $v_i$ for each one of said radar detections 9, 10, 11.

45: Aggregating and storing detection lists $\{D_i^t\}^{t=t_0,...,t_0-N}$ from said radar cycles.

46: Grouping the radar detections 9, 10, 11 in the detection lists $\{D_i^t\}^{t=t_0,...,t_0-N}$ into consistently moving motion subsets 40, 41, 42 in a segmentation procedure, each motion subset 40, 41, 42 corresponding to a certain target object 6, 7, 8.

50: Determining a corresponding group motion vector $V_1$, $V_2$, $V_3$.

51: Determining a relative motion between at least one target object 6, 7, 8 and the antenna device 47 by means of said group motion vector $V_1$, $V_2$, $V_3$.

52: Mapping the coordinate system 48 such that said target object 6, 7, 8 is stationary and such that the antenna device 47 has a determined motion.

53: Generating a synthetic antenna aperture using acquired radar signals at known intervals in time, and by using the determined motion of the antenna device 47, such that the physical antenna aperture is conferred a determined movement over time.

The present disclosure is not limited to the examples above, but may vary freely within the scope of the appended claims. For example, the radar sensor arrangement 3 is assumed to be of a previously known design, for example comprising a radar transmitter, a radar receiver and a receiving antenna array. The radar sensor arrangement 3 may furthermore comprise a number of other parts, and is for example connected to a warning and/or information device comprised in the vehicle 1 in a previously known manner.

The calculations and determining procedures are performed by the processing unit 4, where the processing unit 4 should be regarded as a processing unit arrangement that is in the form of one unit or several units that either co-operate or handle different tasks more or less independently. In the case of several units, these may be placed adjacent to each other, or in a distributed manner.

According to some aspects. the vehicle environment detection system comprises other detection devices such as a camera device 30. LIDAR devices and other similar arrangements are also conceivable. According to some aspects, the vehicle environment detection system comprises several detection devices of a certain type, such as for example several radar sensor arrangements that are adapted to cover different fields of view.

All details given in the examples are of course only given as an illustration of the present disclosure, and should not be regarded as limiting in any way.

The present disclosure enables a motion model of each target object relative to the radar sensor arrangement to be determined. The motion model in turn enables an inverse SAR technique to be applied to the already received and stored radar signals such that a synthetic aperture view is obtained.

Generally, the present disclosure relates to a vehicle environment detection system 2 that comprises at least one radar sensor arrangement 3 and at least one processing unit 4, where the radar sensor arrangement 3 comprises an antenna device 47 that has a physical antenna aperture 49 with a certain field of view 5, where the radar sensor arrangement 3 is arranged to detect at least two radar detections 9, 10, 11 in a coordinate system 48 during at least two radar cycles, where, for each radar cycle, said processing unit 4 is arranged to generate a detection list $\{D_i^t\}^{t=t_0,...,t_0-N}$ comprising range $r_i$, azimuth angle $\varphi_i$ and Doppler velocity $v_i$ for each one of said radar detections 9, 10, 11. Said processing unit 4 is further arranged to aggregate and store detection lists $\{D_i^t\}^{t=t_0,...,t_0-N}$ from said radar cycles in a detection memory 12, and then to group the radar detections 9, 10, 11 in the detection lists $\{D_i^t\}^{t=t_0,...,t_0-N}$ into consistently moving motion subsets 40, 41, 42 in a segmentation procedure, each motion subset 40, 41, 42 corresponding to a certain target object 6, 7, 8 and having a corresponding group motion vector $V_1$, $V_2$, $V_3$ that is determined by the processing unit 4, where the processing unit 4 further is arranged to:

- determine a relative motion between at least one target object 6, 7, 8 and the antenna device 47 by means of said group motion vector $V_1$, $V_2$, $V_3$;
- map the coordinate system 48 such that said target object 6, 7, 8 is stationary and such that the antenna device 47 has a determined motion; and
- generate a synthetic antenna aperture by means of acquired radar signals at known intervals in time, and by means of the determined motion of the antenna device 47, such that the physical antenna aperture is conferred a determined movement over time.

According to some aspects, for each radar cycle, said processing unit 4 is arranged to:

- generate an output list M of motion subsets 40, 41, 42, where the output list M comprises a group motion vector $V_k$ for each motion subset 40, 41, 42, and where each group motion vector $V_k$ represents a

group motion of a respective motion subset 40, 41, 42; and to

- generate a labelling $L_i$ of each input detection, where, for each radar detection, the labelling $L_i$ comprises an object identifier $I_i$ which describes to which motion subset a given radar detection belongs, and additional flags $f_i$ for each radar detection.

According to some aspects, in order to perform the segmentation procedure, for each one of all available motion subsets said processing unit 4 is arranged to:

- predict a present motion subset 40 for the next radar cycle, independently of other motion subsets 41, 42;
- associate new radar detections with the present motion subset 40; and to
- generate an updated group motion vector;

where said processing unit 4 further is arranged to generate an updated list $M_u$ of motion subsets.

According to some aspects, said processing unit 4 is arranged to determine that radar detections which are not associated with any existing motion subset are unassociated, where said processing unit 4 is arranged to seek for new motion subsets for said unassociated radar detections.

According to some aspects, said processing unit 4 is arranged to:

detect if at least two motion subsets 31, 32 have equal group motion vectors $V_{A1}$, $V_{A2}$; and to detect if the radar detections 34, 35, 36 follow a respective common cosine curve in an azimuth angle vs. Doppler velocity domain, where the corresponding cosine curves overlap, and if that is determined to be the case, said processing unit 4 is arranged to merge said motion subsets 31, 32 into one merged subset 37.

Generally, the present disclosure also relates to a method for obtaining a synthetic antenna aperture using a radar sensor arrangement 3 that uses an antenna device 47 with a physical antenna aperture 49, where the radar sensor arrangement 3 is used in a coordinate system 48 for receiving radar signals 9, 10, 11 outside a vehicle 1, where the method comprises:

43 detecting at least two radar detections 9, 10, 11 in the coordinate system 48 during at least two radar cycles; and
44 for each radar cycle, generating a detection list

$$\{D_i^t\}^{t=t_0,...,t_0-N}$$ comprising range $r_i$, azimuth

angle $\varphi_i$ and Doppler velocity $v_i$ for each one of said radar detections 9, 10, 11. The method further comprises:

45 aggregating and storing detection lists

$$\{D_i^t\}^{t=t_0,...,t_0-N}$$ from said radar cycles in a detection memory 12; and 46 grouping the radar detections 9, 10, 11 in the detection lists

$$\{D_i^t\}^{t=t_0,...,t_0-N}$$ into consistently moving motion subsets 40, 41, 42 in a segmentation procedure, each motion subset 40, 41, 42 corresponding to a certain target object 6, 7, 8, where the method further comprises:

50 determining a corresponding group motion vector $V_1$, $V_2$, $V_3$;
51 determining a relative motion between at least one target object 6, 7, 8 and the antenna device 47 by means of said group motion vector $V_1$, $V_2$, $V_3$;
52 mapping the coordinate system 48 such that said target object 6, 7, 8 is stationary and such that the antenna device 47 has a determined motion; and
53 generating a synthetic antenna aperture using acquired radar signals at known intervals in time, and by using the determined motion of the antenna device 47, such that the physical antenna aperture is conferred a determined movement over time.

According to some aspects, for each radar cycle, the method comprises:

- generating an output list M of motion subsets 40, 41, 42, where the output list M comprises a group motion vector $V_k$ for each motion subset 40, 41, 42, and where each group motion vector $V_k$ represents a group motion of a respective motion subset 40, 41, 42; and

- generating a labelling $L_i$ of each input detection, where, for each radar detection, the labelling $L_i$ comprises an object identifier $I_i$ which describes to which motion subset a given radar detection belongs, and additional flags $f_i$ for each radar detection.

According to some aspects, in order to perform the segmentation procedure, for each one of all available motion subsets the method comprises:

24 predicting a present motion subset 40 for the next radar cycle, independently of other motion subsets 41, 42;
25 associating new radar detections with the present motion subset 40; and
26 generating an updated group motion vector;

where the method further comprises generating an updated list $M_u$ of motion subsets.

According to some aspects, the method comprises:

- determining that radar detections which are not associated with any existing motion subset are unassociated; and

- seeking for new motion subsets for said unassociated radar detections.

According to some aspects, the method comprises:

- detecting if at least two motion subsets 31, 32 have equal group motion vectors $V_{A1}$, $V_{A2}$; and
- detecting if the radar detections 34, 35, 36 follow a respective common cosine curve in an azimuth angle vs. Doppler velocity domain, where the corresponding cosine curves overlap,

and if that is determined to be the case, the method comprises merging said motion subsets 31, 32 into one merged subset 37.

## Claims

1. A vehicle environment detection system (2) that comprises at least one radar sensor arrangement (3) and at least one processing unit (4), where the radar sensor arrangement (3) comprises an antenna device (47) that has a physical antenna aperture (49) with a certain field of view (5), where the radar sensor arrangement (3) is arranged to detect at least two radar detections (9, 10, 11) in a coordinate system (48) during at least two radar cycles, where, for each radar cycle, said processing unit (4) is arranged to generate a detection list

$$\left(\{D_i^f\}^{t=t_0,\ldots,t_0-N}\right)$$

comprising range ($r_i$), azimuth angle ($\phi_i$) and Doppler velocity ($v_i$) for each one of said radar detections (9, 10, 11), and to aggregate and store detection lists

$$\left(\{D_i^f\}^{t=t_0,\ldots,t_0-N}\right)$$

from said radar cycles in a detection memory (12), **characterized in that** said processing unit (4) further is arranged to group the radar detections (9, 10, 11) in the detection lists

$$\left(\{D_i^f\}^{t=t_0,\ldots,t_0-N}\right)$$

into consistently moving motion subsets (40, 41, 42) in a segmentation procedure, each motion subset (40, 41, 42) corresponding to a certain target object (6, 7, 8) and having a corresponding group motion vector ($V_1$, $V_2$, $V_3$) that is determined by the processing unit (4),

- to determine a relative motion between at least one target object (6, 7, 8) and the antenna device (47) by means of said group motion vector ($V_1$, $V_2$, $V_3$);
- to map the coordinate system (48) such that said target object (6, 7, 8) is stationary and such that the antenna device (47) has a determined motion; and
- to generate a synthetic antenna aperture by means of acquired radar signals at known intervals in time, and by means of the determined motion of the antenna device (47), such that the physical antenna aperture (49) is conferred a determined movement over time.

2. A vehicle environment detection system (2) according to claim 1, **characterized in that**, for each radar cycle, said processing unit (4) is arranged to:

- generate an output list (M) of motion subsets (40, 41, 42), where the output list (M) comprises a group motion vector ($V_k$) for each motion subset (40, 41, 42), and where each group motion vector ($V_k$) represents a group motion of a respective motion subset (40, 41, 42); and to
- generate a labelling ($L_i$) of each input detection, where, for each radar detection, the labelling ($L_i$) comprises an object identifier ($l_i$) which describes to which motion subset a given radar detection belongs, and additional flags ($f_i$) for each radar detection.

3. A vehicle environment detection system (2) according to claim 2, **characterized in that**, in order to perform the segmentation procedure, for each one of all available motion subsets said processing unit (4) is arranged to:

- predict a present motion subset (40) for the next radar cycle, independently of other motion subsets (41, 42);
- associate new radar detections with the present motion subset (40); and to
- generate an updated group motion vector;

where said processing unit (4) further is arranged to generate an updated list ($M_u$) of motion subsets.

**4.** A vehicle environment detection system (2) according to claim 3, **characterized in that** said processing unit (4) is arranged to determine that radar detections which are not associated with any existing motion subset are unassociated, where said processing unit (4) is arranged to seek for new motion subsets for said unassociated radar detections.

**5.** A vehicle environment detection system (2) according to any one of the previous claims, **characterized in that** said processing unit (4) is arranged to:

detect if at least two motion subsets (31, 32) have equal group motion vectors ($V_{A1}$, $V_{A2}$); and to
detect if the radar detections (34, 35, 36) follow a respective common cosine curve in an azimuth angle vs. Doppler velocity domain, where the corresponding cosine curves overlap,
and if that is determined to be the case, said processing unit (4) is arranged to merge said motion subsets (31, 32) into one merged subset (37).

**6.** A method for obtaining a synthetic antenna aperture using a radar sensor arrangement (3) that uses an antenna device (47) with a physical antenna aperture (49), where the radar sensor arrangement (3) is used in a coordinate system (48) for receiving radar signals (9, 10, 11) outside a vehicle (1), where the method comprises:

(43) detecting at least two radar detections (9, 10, 11) in the coordinate system (48) during at least two radar cycles; and
(44) for each radar cycle, generating a detection list ($\{D_i^t\}^{t=t_0,...,t_0-N}$) comprising range ($r_i$), azimuth angle ($\varphi_i$) and Doppler velocity ($v_i$) for each one of said radar detections (9, 10, 11), and
(45) aggregating and storing detection lists ($\{D_i^t\}^{t=t_0,...,t_0-N}$) from said radar cycles in a detection memory (12);
**characterized in that** the method further comprises:

(46) grouping the radar detections (9, 10, 11) in the detection lists ($\{D_i^t\}^{t=t_0,...,t_0-N}$) into consistently moving motion subsets (40, 41, 42) in a segmentation procedure, each motion subset (40, 41, 42) corresponding to a certain target object (6, 7, 8),
(50) determining a corresponding group motion vector ($V_1$, $V_2$, $V_3$);
(51) determining a relative motion between at least one target object (6, 7, 8) and the antenna device (47) by means of said group motion vector ($V_1$, $V_2$, $V_3$);
(52) mapping the coordinate system (48) such that said target object (6, 7, 8) is stationary and such that the antenna device (47) has a determined motion; and
(53) generating a synthetic antenna aperture using acquired radar signals at known intervals in time, and by using the determined motion of the antenna device (47), such that the physical antenna aperture (49) is conferred a determined movement over time.

**7.** The method according to claim 6, **characterized in that**, for each radar cycle, the method comprises:

- generating an output list (M) of motion subsets (40, 41, 42), where the output list (M) comprises a group motion vector ($V_k$) for each motion subset (40, 41, 42), and where each group motion vector ($V_k$) represents a group motion of a respective motion subset (40, 41, 42); and
- generating a labelling ($L_i$) of each input detection, where, for each radar detection, the labelling ($L_i$) comprises an object identifier ($l_i$) which describes to which motion subset a given radar detection belongs, and additional flags ($f_i$) for each radar detection.

**8.** The method according to claim 7, **characterized in that**, in order to perform the segmentation procedure, for each one of all available motion subsets the method comprises:

(24) predicting a present motion subset (40) for the next radar cycle, independently of other motion subsets (41, 42);
(25) associating new radar detections with the present motion subset (40); and
(26) generating an updated group motion vector;

where the method further comprises generating an updated list ($M_u$) of motion subsets.

**9.** The method according to claim 8, **characterized in that** the method comprises:

- determining that radar detections which are not associated with any existing motion subset are unassociated; and
- seeking for new motion subsets for said unassociated radar detections.

**10.** The method according to any one of the claims 6-9, **characterized in that** the method comprises:

- detecting if at least two motion subsets (31, 32) have equal group motion vectors ($V_{A1}$, $V_{A2}$); and
- detecting if the radar detections (34, 35, 36) follow a respective common cosine curve in an azimuth angle vs. Doppler velocity domain, where the corresponding cosine curves overlap,

and if that is determined to be the case, the method comprises merging said motion subsets (31, 32) into one merged subset (37).

**Patentansprüche**

1. Fahrzeugumgebungserfassungssystem (2), das mindestens eine Radarsensoranordnung (3) und mindestens eine Verarbeitungseinheit (4) umfasst, wobei die Radarsensoranordnung (3) eine Antennenvorrichtung (47) umfasst, die eine physikalische Antennenapertur (49) mit einem gewissen Sichtfeld (5) aufweist, wobei die Radarsensoranordnung (3) dazu eingerichtet ist, mindestens zwei Radarerfassungen (9, 10, 11) in einem Koordinatensystem (48) während mindestens zwei Radarzyklen zu erfassen, wobei die Verarbeitungseinheit (4) dazu eingerichtet ist, für jeden Radarzyklus eine Erfassungsliste

$$\left(\left\{D_i^t\right\}^{t=t_0,\ldots,t_0-N}\right),$$

umfassend Reichweite ($r_i$), Azimutwinkel ($\Phi_i$) und Dopplergeschwindigkeit ($v_i$) für jede der Radarerfassungen (9, 10, 11), zu erzeugen und Erfassungslisten

$$\left(\left\{D_i^t\right\}^{t=t_0,\ldots,t_0-N}\right)$$

von den Radarzyklen zu aggregieren und in einem Erfassungsspeicher (12) zu speichern, **dadurch gekennzeichnet, dass** die Verarbeitungseinheit (4) ferner dazu eingerichtet ist, die Radarerfassungen (9, 10, 11) in den Erfassungslisten

$$\left(\left\{D_i^t\right\}^{t=t_0,\ldots,t_0-N}\right)$$

in einem Segmentierungsvorgang in sich stetig bewegende Bewegungsteilsätze (40, 41, 42) zu gruppieren, wobei jeder Bewegungsteilsatz (40, 41, 42) einem gewissen Zielobjekt (6, 7, 8) entspricht und einen entsprechenden Gruppenbewegungsvektor ($V_1$, $V_2$, $V_3$) aufweist, der von der Verarbeitungseinheit (4) bestimmt wird,

- eine relative Bewegung zwischen mindestens einem Zielobjekt (6, 7, 8) und der Antennenvorrichtung (47) mithilfe des Gruppenbewegungsvektors ($V_1$, $V_2$, $V_3$) zu bestimmen;
- das Koordinatensystem (48) zu kartieren, so dass das Zielobjekt (6, 7, 8) stationär ist und so dass die Antennenvorrichtung (47) eine bestimmte Bewegung aufweist; und
- eine synthetische Antennenapertur mithilfe bezogener Radarsignale in bekannten Zeitintervallen und mithilfe der bestimmten Bewegung der Antennenvorrichtung (47) zu erzeugen, so dass der physikalischen Antennenapertur (49) eine bestimmte Bewegung im Zeitablauf verliehen wird.

2. Fahrzeugumgebungserfassungssystem (2) nach Anspruch 1, **dadurch gekennzeichnet, dass** die Verarbeitungseinheit (4) dazu eingerichtet ist, für jeden Radarzyklus:

- eine Ausgabeliste (M) von Bewegungsteilsätzen (40, 41, 42) zu erzeugen, wobei die Ausgabeliste (M) einen Gruppenbewegungsvektor ($V_k$) für jeden Bewegungsteilsatz (40, 41, 42) umfasst und wobei jeder Gruppenbewegungsvektor ($V_k$) eine Gruppenbewegung eines jeweiligen Bewegungsteilsatzes (40, 41, 42) darstellt; und
- eine Etikettierung ($L_i$) für jede eingegebene Erfassung zu erzeugen, wobei die Etikettierung ($L_i$) für jede Radarerfassung eine Objektkennung ($l_i$), die beschreibt, zu welchem Bewegungsteilsatz eine gegebene Radarerfassung gehört, und zusätzliche Markierungen ($f_i$) für jede Radarerfassung umfasst.

3. Fahrzeugumgebungserfassungssystem (2) nach Anspruch 2, **dadurch gekennzeichnet, dass,** um den Segmentierungsvorgang durchzuführen, die Verarbeitungseinheit (4) dazu eingerichtet ist, für jeden von allen verfügbaren Bewegungsteilsätzen:

- einen aktuellen Bewegungsteilsatz (40) für den nächsten Radarzyklus unabhängig von anderen Bewegungsteilsätzen (41, 42) vorherzusagen;
- neue Radarerfassungen mit dem aktuellen Bewegungsteilsatz (40) zu assoziieren und
- einen aktualisierten Gruppenbewegungsvektor zu erzeugen;

wobei die Verarbeitungseinheit (4) ferner dazu eingerichtet ist, eine aktualisierte Liste ($M_U$) von Bewegungsteilsätzen zu erzeugen.

4. Fahrzeugumgebungserfassungssystem (2) nach Anspruch 3, **dadurch gekennzeichnet, dass** die Verarbeitungseinheit (4) dazu eingerichtet ist, zu bestimmen, dass Radarerfassungen, die nicht mit einem beliebigen existierenden Bewegungsteilsatz assoziiert sind, nicht assoziiert sind, wobei die Verarbeitungseinheit (4) dazu eingerichtet ist, nach neuen Bewegungsteilsätzen für die nicht assoziierten Radarerfassungen zu suchen.

5. Fahrzeugumgebungserfassungssystem (2) nach einem der vorhergehenden Ansprüche, **dadurch gekennzeichnet, dass** die Verarbeitungseinheit (4) dazu eingerichtet ist:

zu erfassen, ob mindestens zwei Bewegungsteilsätze (31, 32) gleiche Gruppenbewegungsvektoren ($V_{A1}$, $V_{A2}$) aufweisen; und zu erfassen, ob die Radarerfassungen (34, 35, 36) einer jeweiligen gemeinsamen Kosinuskurve in einem Azimutwinkel-versus-Dopplergeschwindigkeit-Bereich folgen, wobei die entsprechenden Kosinuskurven sich überschneiden,

und wenn bestimmt wird, dass das der Fall ist, die Verarbeitungseinheit (4) dazu eingerichtet ist, die Bewegungsteilsätze (31, 32) zu einem fusionierten Bewegungsteilsatz (37) zu fusionieren.

6. Verfahren zum Erhalten einer synthetischen Antennenapertur unter Verwendung einer Radarsensoranordnung (3), die eine Antennenvorrichtung (47) mit einer physikalischen Antennenapertur (49) verwendet, wobei die Radarsensoranordnung (3) in einem Koordinatensystem (48) zum Empfangen von Radarsignalen (9, 10, 11) außerhalb eines Fahrzeugs (1) verwendet wird, wobei das Verfahren umfasst:

(43) Erfassen von mindestens zwei Radarerfassungen (9, 10, 11) in dem Koordinatensystem (48) während mindestens zwei Radarzyklen und (44) für jeden Radarzyklus Erzeugen einer Erfassungsliste $\left( \left\{ D_i^t \right\}^{t=t_0,...,t_0-N} \right)$, umfassend Reichweite ($r_i$), Azimutwinkel ($\Phi_i$) und Dopplergeschwindigkeit ($v_i$) für jede der Radarerfassungen (9, 10, 11), und (45) Aggregieren und Speichern von Erfassungslisten $\left( \left\{ D_i^t \right\}^{t=t_0,...,t_0-N} \right)$ von den Radarzyklen in einem Erfassungsspeicher (12); **dadurch gekennzeichnet, dass** das Verfahren ferner umfasst:

(46) Gruppieren der Radarerfassungen (9, 10, 11) in den Erfassungslisten $\left( \left\{ D_i^t \right\}^{t=t_0,...,t_0-N} \right)$ in einem Segmentierungsvorgang in sich stetig bewegende Bewegungsteilsätze (40, 41, 42), wobei jeder Bewegungsteilsatz (40, 41, 42) einem gewissen Zielobjekt (6, 7, 8) entspricht, (50) Bestimmen eines entsprechenden Gruppenbewegungsvektors ($V_1$, $V_2$, $V_3$); (51) Bestimmen einer relativen Bewegung zwischen mindestens einem Zielobjekt (6, 7, 8) und der Antennenvorrichtung (47) mithilfe des Gruppenbewegungsvektors ($V_1$, $V_2$, $V_3$); (52) Kartieren des Koordinatensystems (48), so dass das Zielobjekt (6, 7, 8) stationär ist und so dass die Antennenvorrichtung (47) eine bestimmte Bewegung aufweist; und (53) Erzeugen einer synthetischen Antennenapertur mithilfe bezogener Radarsignale in bekannten Zeitintervallen und durch Verwenden der bestimmten Bewegung der Antennenvorrichtung (47), so dass der physikalischen Antennenapertur (49) eine bestimmte Bewegung im Zeitablauf verliehen wird.

7. Verfahren nach Anspruch 6, **dadurch gekennzeichnet, dass** das Verfahren für jeden Radarzyklus umfasst:

- Erzeugen einer Ausgabeliste (M) von Bewegungsteilsätzen (40, 41, 42), wobei die Ausgabeliste (M) einen Gruppenbewegungsvektor ($V_k$) für jeden Bewegungsteilsatz (40, 41, 42) umfasst und wobei jeder Gruppenbewegungsvektor ($V_k$) eine Gruppenbewegung eines jeweiligen Bewegungsteilsatzes (40, 41, 42) darstellt; und
- Erzeugen einer Etikettierung ($L_i$) für jede eingegebene Erfassung, wobei die Etikettierung ($L_i$) für jede Radarerfassung eine Objektkennung ($l_i$), die beschreibt, zu welchem Bewegungsteilsatz eine gegebene Radarerfassung gehört, und zusätzliche Markierungen ($f_i$) für jede Radarerfassung umfasst.

8. Verfahren nach Anspruch 7, **dadurch gekennzeichnet, dass,** um den Segmentierungsvorgang durchzuführen, das Verfahren für jeden von allen verfügbaren Bewegungsteilsätzen umfasst:

(24) Vorhersagen eines aktuellen Bewegungsteilsatzes (40) für den nächsten Radarzyklus unabhängig von anderen Bewegungsteilsätzen (41, 42); (25) Assoziieren neuer Radarerfassungen mit dem aktuellen Bewegungsteilsatz (40); und (26) Erzeugen eines aktualisierten Gruppenbewegungsvektors;

wobei das Verfahren ferner ein Erzeugen einer aktualisierten Liste ($M_u$) von Bewegungsteilsätzen umfasst.

9. Verfahren nach Anspruch 8, **dadurch gekennzeichnet, dass** das Verfahren umfasst:

- Bestimmen, dass Radarerfassungen, die nicht mit einem beliebigen existierenden Bewegungsteilsatz assoziiert sind, nicht assoziiert sind; und
- Suchen nach neuen Bewegungsteilsätzen für die nicht assoziierten Radarerfassungen.

10. Verfahren nach einem der Ansprüche 6-9, **dadurch gekennzeichnet, dass** das Verfahren umfasst:

- Erfassen, ob mindestens zwei Bewegungsteilsätze (31, 32) gleiche Gruppenbewegungsvektoren ($V_{A1}$, $V_{A2}$) aufweisen; und
- Erfassen, ob die Radarerfassungen (34, 35, 36) einer jeweiligen gemeinsamen Kosinuskurve in einem Azimutwinkel-versus-Dopplergeschwindigkeit-Bereich folgen, wobei die entsprechenden Kosinuskurven sich überschneiden,

und wenn bestimmt wird, dass das der Fall ist, das Verfahren ein Fusionieren der Bewegungsteilsätze (31, 32) zu einem fusionierten Bewegungsteilsatz (37) umfasst.

**Revendications**

1. Système (2) de détection de l'environnement d'un véhicule, comprenant au moins un dispositif capteur radar (3) et au moins une unité de traitement (4), ledit dispositif capteur radar (3) comprenant un dispositif formant antenne (47) présentant une ouverture d'antenne physique (49) ayant un certain champ de vision (5), ledit dispositif capteur radar (3) étant agencé pour détecter au moins deux détections radar (9, 10, 11) dans un système de coordonnées (48) au cours d'au moins deux cycles radar, ladite unité de traitement (4) étant agencée pour générer, pour chaque cycle radar, une liste de détections

$$\left(\{D_i^t\}^{t=t_0,\ldots,t_0-N}\right)$$

comprenant la portée ($r_i$), l'angle d'azimut ($\phi_i$) et la vitesse Doppler ($v_i$) pour chacune desdites détections radar (9, 10, 11), et pour rassembler et mettre dans une mémoire de détection (12) les listes de

détections

$$\left(\{D_i^t\}^{t=t_0,\ldots,t_0-N}\right)$$

issues desdits cycles radar ; **caractérisé en ce que** ladite unité de traitement (4) est agencée en outre pour regrouper les détections radar (9, 10, 11) des listes de détections

$$\left(\{D_i^t\}^{t=t_0,\ldots,t_0-N}\right)$$

en des sous-ensembles de déplacement (40, 41, 42) en déplacement constant au cours d'une procédure de segmentation, chaque sous-ensemble de déplacement (40, 41, 42) correspondant à un certain objet cible (6, 7, 8) et possédant un vecteur de déplacement de groupe ($V_1$, $V_2$, $V_3$) correspondant qui est déterminé par l'unité de traitement (4),

- pour déterminer un déplacement relatif entre au moins un objet cible (6, 7, 8) et le dispositif formant antenne (47) au moyen dudit vecteur de déplacement de groupe ($V_1$, $V_2$, $V_3$),
- pour mapper le système de coordonnées (48) de manière que ledit objet cible (6, 7, 8) soit stationnaire et de manière que le dispositif formant antenne (47) ait un déplacement déterminé, et
- pour générer une ouverture d'antenne synthétique au moyen de signaux radar acquis à intervalles de temps connus, et au moyen du déplacement déterminé du dispositif formant antenne (47), de manière que soit conféré à l'ouverture d'antenne physique (49) un mouvement déterminé dans le temps.

2. Système (2) de détection de l'environnement d'un véhicule selon la revendication 1, **caractérisé en ce que,** pour chaque cycle radar, ladite unité de traitement (4) est agencée pour :

- générer une liste de sortie (M) de sous-ensembles de déplacement (40, 41, 42), ladite liste de sortie (M) comprenant un vecteur de déplacement de groupe ($V_k$) pour chaque sous-ensemble de déplacement (40, 41, 42), et chaque vecteur de déplacement de groupe ($V_k$) représentant un déplacement de groupe d'un sous-ensemble de déplacement (40, 41, 42) respectif, et
- générer un étiquetage ($L_i$) de chaque détection d'entrée, ledit étiquetage ($L_i$) comprenant, pour chaque détection radar, un identifiant d'objet ($l_i$) qui décrit à quel sous-ensemble de déplacement appartient une détection radar donnée, et des drapeaux supplémentaires ($f_i$) pour chaque

détection radar.

**3.** Système (2) de détection de l'environnement d'un véhicule selon la revendication 2, **caractérisé en ce que,** pour réaliser la procédure de segmentation, pour chacun des sous-ensembles de déplacement disponibles, ladite unité de traitement (4) est agencée pour :

    - prédire un sous-ensemble de déplacement présent (40) pour le prochain cycle radar, indépendamment des autres sous-ensembles de déplacement (41, 42),
    - associer de nouvelles détections radar au sous-ensemble de déplacement présent (40), et
    - générer un vecteur de déplacement de groupe actualisé ; ladite unité de traitement (4) étant agencée en outre pour générer une liste actualisée ($M_u$) de sous-ensembles de déplacement.

**4.** Système (2) de détection de l'environnement d'un véhicule selon la revendication 3, **caractérisé en ce que** ladite unité de traitement (4) est agencée pour déterminer que les détections radar qui ne sont associées à aucun sous-ensemble de déplacement existant sont non associées, ladite unité de traitement (4) étant agencée pour chercher de nouveaux sous-ensembles de déplacement pour lesdites détections radar non associées.

**5.** Système (2) de détection de l'environnement d'un véhicule selon l'une quelconque des revendications précédentes, **caractérisé en ce que** ladite unité de traitement (4) est agencée pour :

    détecter si au moins deux sous-ensembles de déplacement (31, 32) ont des vecteurs de déplacement de groupe ($V_{A1}$, $V_{A2}$) égaux, et détecter si les détections radar (34, 35, 36) suivent une courbe cosinus commune respective dans un domaine de la courbe de variation de l'angle d'azimut par rapport à la vitesse Doppler dans lequel les courbes cosinus correspondantes se chevauchent,
    et si cela est avéré, ladite unité de traitement (4) est agencée pour fusionner lesdits sous-ensembles de déplacement (31, 32) en un sous-ensemble fusionné (37).

**6.** Procédé de réalisation d'une ouverture d'antenne synthétique au moyen d'un dispositif capteur radar (3) employant un dispositif formant antenne (47) présentant une ouverture d'antenne physique (49), ledit dispositif capteur radar (3) étant mis en œuvre dans un système de coordonnées (48) pour recevoir des signaux radar (9, 10, 11) à l'extérieur d'un véhicule (1), ledit procédé comprenant :

(43) la détection d'au moins deux détections radar (9, 10, 11) dans le système de coordonnées (48) au cours d'au moins deux cycles radar,
(44) pour chaque cycle radar, la génération d'une liste de détections

$$\left(\{D_i^t\}^{t=t_0,\ldots,t_0-N}\right) \text{ comprenant la por-}$$

tée ($r_i$), l'angle d'azimut ($\phi_i$) et la vitesse Doppler ($v_i$) pour chacune desdites détections radar (9, 10, 11), et
(45) le rassemblement et la mise dans une mémoire de détection (12) des listes de détections

$$\left(\{D_i^t\}^{t=t_0,\ldots,t_0-N}\right) \text{ issues desdits cy-}$$

cles radar ;
**caractérisé en ce que** le procédé comprend en outre :

(46) le regroupement des détections radar (9, 10, 11) des listes de détections

$$\left(\{D_i^t\}^{t=t_0,\ldots,t_0-N}\right) \text{ en des sous-}$$

ensembles de déplacement (40, 41, 42) en déplacement constant au cours d'une procédure de segmentation, chaque sous-ensemble de déplacement (40, 41, 42) correspondant à un certain objet cible (6, 7, 8),
(50) la détermination d'un vecteur de déplacement de groupe correspondant ($V_1$, $V_2$, $V_3$),
(51) la détermination d'un déplacement relatif entre au moins un objet cible (6, 7, 8) et le dispositif formant antenne (47) au moyen dudit vecteur de déplacement de groupe ($V_1$, $V_2$, $V_3$),
(52) le mappage du système de coordonnées (48) de manière que ledit objet cible (6, 7, 8) soit stationnaire et de manière que le dispositif formant antenne (47) ait un déplacement déterminé, et
(53) la génération d'une ouverture d'antenne synthétique à l'aide de signaux radar acquis à intervalles de temps connus, et à l'aide du déplacement déterminé du dispositif formant antenne (47), de manière que soit conféré à l'ouverture d'antenne physique (49) un mouvement déterminé dans le temps.

**7.** Procédé selon la revendication 6, **caractérisé en ce que,** pour chaque cycle radar, le procédé comprend :

    - la génération d'une liste de sortie (M) de sous-ensembles de déplacement (40, 41, 42), ladite liste de sortie (M) comprenant un vecteur de déplacement de groupe ($V_k$) pour chaque sous-ensemble de déplacement (40, 41, 42), et chaque vecteur de déplacement de groupe ($V_k$) représentant un déplacement de groupe d'un sous-ensemble de déplacement (40, 41, 42) respectif, et

- la génération d'un étiquetage ($L_i$) de chaque détection d'entrée, l'étiquetage ($L_i$) comprenant, pour chaque détection radar, un identifiant d'objet ($I_i$) qui décrit à quel sous-ensemble de déplacement appartient une détection radar donnée, et des drapeaux supplémentaires ($f_i$) pour chaque détection radar.

8. Procédé selon la revendication 7, **caractérisé en ce que**, pour réaliser la procédure de segmentation, pour chacun des sous-ensembles de déplacement disponibles, le procédé comprend :

(24) la prédiction d'un sous-ensemble de déplacement présent (40) pour le prochain cycle radar, indépendamment des autres sous-ensembles de déplacement (41, 42),
(25) l'association de nouvelles détections radar au sous-ensemble de déplacement présent (40), et
(26) la génération d'un vecteur de déplacement de groupe actualisé ;

ledit procédé comprenant en outre la génération d'une liste actualisée ($M_u$) de sous-ensembles de déplacement.

9. Procédé selon la revendication 8, **caractérisé en ce qu'**il comprend :

- la détermination du fait que les détections radar qui ne sont associées à aucun sous-ensemble de déplacement existant sont non associées, et
- la recherche de nouveaux sous-ensembles de déplacement pour lesdites détections radar non associées.

10. Procédé selon l'une quelconque des revendications 6 à 9, **caractérisé en ce qu'**il comprend :

- une détection visant à savoir si au moins deux sous-ensembles de déplacement (31, 32) ont des vecteurs de déplacement de groupe ($V_{A1}$, $V_{A2}$) égaux, et
- une détection visant à savoir si les détections radar (34, 35, 36) suivent une courbe cosinus commune respective dans un domaine de la courbe de variation de l'angle d'azimut par rapport à la vitesse Doppler dans lequel les courbes cosinus correspondantes se chevauchent,

et si cela est avéré, le procédé comprend la fusion desdits sous-ensembles de déplacement (31, 32) en un sous-ensemble fusionné (37).

FIG. 1

$D_i$

| Store in detection memory | 13 |

$\{D_i\}^{t,...,t-N}$

| Motion segmentation | 14 |

$\{L_i\}^{t,...,t-N}$

| Free space abstraction | Object tracking | Ego motion estimation |

15    16    17

FIG. 2

FIG. 3

FIG. 4

FIG. 5A

FIG. 5B

```
┌─────────────────────┐
│   Detecting radar   │        43
│     detections      │
└─────────────────────┘
           │
           ▼
┌─────────────────────┐
│ Generating detection list │   44
└─────────────────────┘
           │
           ▼
┌─────────────────────┐
│ Storing detection lists │     45
└─────────────────────┘
           │
           ▼
┌─────────────────────┐
│   Grouping radar    │        46
│     detections      │
└─────────────────────┘
           │
           ▼
┌─────────────────────┐
│  Determining group  │        50
│    motion vector    │
└─────────────────────┘
           │
           ▼
┌─────────────────────┐
│ Determining relative │       51
│       motion        │
└─────────────────────┘
           │
           ▼
┌─────────────────────┐
│ Mapping coordinate  │        52
│       system        │
└─────────────────────┘
           │
           ▼
┌─────────────────────┐
│ Generating synthetic │       53
│   antenna aperture  │
└─────────────────────┘
```

FIG. 6

**REFERENCES CITED IN THE DESCRIPTION**

**Patent documents cited in the description**

- DE 102008025773

- US 9182476 B2